# EUROPÄISCHE PATENTSCHRIFT

(11) **EP 2 595 330 B1**
(45) Veröffentlichungstag und Bekanntmachung des Hinweises auf die Patenterteilung: **18.03.2015**
(21) Anmeldenummer: 11856088.7
(22) Anmeldetag: 05.12.2011
(51) Int. Cl.: G08G 1/0967, G08G 1/0968, G08G 1/04, H04H 20/55, H04N 7/00, H04N 7/18

(54) **VERFAHREN ZUR MEHRKANAL-VIDEOÜBERWACHUNG VON VERKEHRSKNOTENPUNKTEN**
METHOD FOR MULTICHANNEL VIDEO SURVEILLANCE OF TRAFFIC INTERCHANGES
PROCÉDÉ D'OBSERVATION À CANAUX MULTIPLES DES ÉCHANGEURS ROUTIERS

(30) Priorität: 17.01.2011 RU 2011101549
(43) Veröffentlichungstag der Anmeldung: 22.05.2013
(73) Patentinhaber: Klopov, Pavel Anatolievich, Tyumen 625048 (RU)
(72) Erfinder: Klopov, Pavel Anatolievich, Tyumen 625048 (RU)
(74) Vertreter: Jeck, Anton
(86) Internationale Anmeldenummer: PCT/RU2011/000959
(87) Internationale Veröffentlichungsnummer: WO 2012/099495

(56) Entgegenhaltungen:
- WO-A1-01/82261
- WO-A1-2006/068452
- WO-A1-2007/057696
- CN-A- 101 232 335
- CN-A- 101 764 962
- KR-A- 20100 016 286
- RU-A- 2008 114 196
- US-A1- 2004 226 043
- US-A1- 2010 250 369

## Beschreibung

Die Erfindung betrifft ein Verfahren zur Videoüberwachung von Kreuzungen nach dem Oberbegriff des Anspruchs 1.

Diese Erfindung «Verfahren zur Mehrfach-Videoüberwachung von Kreuzungen» bezieht sich auf ein Verfahren zur Mehrfach-Videoüberwachung von Objekten. Sie kann insbesondere zur Überwachung des Belastungszustands von Kreuzungen, Brücken, bestimmten Straßenabschnitten rund um die Uhr eingesetzt werden.

Das Dokument WO2006/068452 beschreibt ein System zur Erfassung, Übertragung und Wiedergabe von Verkehrsinformationen. Aus dem Stand der Technik ist ein Verfahren zur Fernseh-, Video- und Audioüberwachung bekannt. Das Verfahren wird anhand eines Systems verwirklicht, welches zum Bewachen von Räumen, Autos und anderen Objekten verwendet werden kann. Das Verfahren sorgt für eine Anpassung (Abstimmung hinsichtlich der Schaltung und des Wiedergabeverfahrens) der Empfangs- und Steuereinrichtungen sowie der Ein-richtungen zur Auswertung von den von Fernseh-, Video- und Audioüberwachungssystemen empfangenen Daten an handelsübliche Haushalts-Aufnahme- und -Wiedergabeanlagen. Dank der Ausführung einer Anschlussbaugruppe kann das Fernseh-, Video- und Audioüberwachungssystem ggf. als ein haushaltsgeeignetes Überwachungs- und Schutzsystem verwendet werden. Das Fernsehsignal jeder Überwachungskamera kommt in eine Anschlussbaugruppe. Die Anschlussbaugruppe stimmt die Kamerabilder ihrer Schaltung, Wiedergabe (Aufnahme) und Bildauswahl nach mit einer Wiedergabe- (Fernseher) oder Aufnahmeanlage (Videorecorder) ab. Die Auswahleinheit stellt eine Anpassung der gewählten Kanäle anhand eines Befehlssignals sicher. Die Steuereinheit stellt eine abgestimmte Einschaltung der Kameras und eine Wiedergabe (Aufnahme) anhand des Befehlssignals sicher. Das Verfahren ermöglicht die Anwendung der Haushalts-Fernseh- und Videotechnik in einem Überwachungssystem (Patent RU 2129304, veröffentlicht 1999).

Der Mangel des bekannten Verfahrens besteht in seinen begrenzten Funktionalitäten.
Das bekannte Verfahren ermöglicht keine Bildübertragung auf einmal von mehreren Videokameras in Echtzeit über eine einheitliche Mehrfach-Systemhauptleitung in eine Datenumsetzungseinheit mit einer nachfolgenden Datenausgabe auf einem oder mehreren Bildschirmen.

Durch das RU-Patent 2149460 (veröffentlicht 2000) ist auch ein Verfahren zur Videoüberwachung anhand eines Systems bekannt, welches als Bewachungsmittel für geschlossene Wohn- und unbewohnbare Räumlichkeiten, offene Umfangslängen von Lagern, Garagen, Verwaltungsgebäuden und Betriebsgebäuden sowie als Video-Türsprechanlagen eingesetzt wird. Das System zur Ausführung des bekannten Verfahrens stellt eine Nutzung der Koaxialhauptleitungsführung einer Zentralantenne zur Übertragung des Fernsehsignals an die Fernseher der Überwachungsstellen sicher, ohne dass Störungen für die Signale der Fernsehsendungsstationen erzeugt werden. Das System umfasst Fernseher, Kabelhauptleitungsverteiler, eine Video- und Audioüberwachungseinheit, eine Fernsehsignalanpasseinheit, ein Zuführungskabel und einen Verstärker des Zuführungskabels. Dabei schließt eine Video- und Audioüberwachungseinheit eine Videokamera, ein Mikrofon, einen Videosignalumsetzer, einen Verstärker, einen Modulator, ein Steuerfilter, ein steuerbares Filter und einen Überlagerungsgenerator ein. Die Fernsehsignalanpasseinheit enthält einen frequenzunabhängigen Abschwächer, einen Amplitudenausgleicher und eine Signalbeimischeinheit.

Das bekannte Verfahren ist durch seine begrenzten Funktionalitäten benachteiligt. Es stellt eine Echtzeit-Bildübertragung sofort von einigen Videokameras sicher. Die Videokameras sind in einem beachtlichen Abstand voneinander angeordnet. Die Übertragung erfolgt über eine einheitliche Mehrfach-Systemhauptleitung an einen Umsetzungsknoten. Danach werden alle Bilder in Echtzeit dem Benutzer auf einem oder mehreren Bildschirmen ausgegeben.

Der nächstkommende Stand der Technik (Prototyp) ist ein Verfahren zur Video-Audio-Überwachung, bei dem der Objektzustand gleichzeitig visuell und tonmäßig erfolgt. Bei gleichzeitiger visueller und akustischer Überwachung mittels einer Überwachungsanlage wird gleichzeitig ein Kabelfernsehnetz des Objekts eingesetzt. Die Einrichtung zur Ausführung des Verfahrens weist Videokameras, Mikrofone, Einheiten zur Erzeugung eines modulierten Funkfrequenz-Fernsehsignals, einen Fernsehsignalempfänger, einen Breitband-Videoverstärker und Bedienungspulte für die Fernsehgeräte der Teilnehmer des Kabelfernsehnetzes auf (s. Patent RU 2153567, veröffentlicht 2000).

Dieses bekannte Verfahren zur Video-Audio-Überwachung unter Anwendung einer Koaxialhauptleitungsführung einer Zentralantenne zur Übertragung von einem Fernsehsignal an die Heimfernseher ist dadurch benachteiligt, dass es nicht geeignet ist, verschiedene Informationen an eine einzige Zentrale (Steuerwarte) zusammenzubringen. Es ermöglicht auch keinen Videoempfang sofort von mehreren in einem Abstand auf einem großen Gelände verteilten Videokameras, so dass die einzeln übertragenen Bilder vom Benutzer auf einem Bildschirm alle zusammen angezeigt und zusammengefasst oder je nach Wahl des Bedieners in Echtzeit mit zusätzlichen Informationen ausgegeben werden können.

Es ist Aufgabe der Erfindung, die Funktionalitäten zu erweitern, indem die Bildübertragung in Echtzeit von einigen im Abstand zueinander stehenden Videokameras über eine einheitliche Mehrfach-Systemhauptleitung an eine Umwandlungsstelle sichergestellt wird, wobei die Daten danach auf einem oder mehreren Bildschirmen und eventuell mit zusätzlichen Informationen ausgegeben werden.

Das technische Ergebnis wird dabei wie folgt erreicht.

Gemäß der Erfindung werden die Videoüberwachungsgeräte (Videokameras) an den Kreuzungen (Verkehrsknotenpunkten) angeordnet. Die von den Videoüberwachungsgeräten (Videokameras) empfangenen Informationen werden über eine Datenübertragungsanlage an einen Apparate-Senderaum gesendet. Hier werden die von der Empfangs-, Erfassungs- und Verarbeitungszentrale empfangenen Daten mit Hilfe von einem Satz einer Gerätetechnik, Schaltungen und Datenverarbeitungs- und -analyseverfahren ausgebildet und mittels z. B. Bündelung und/oder Quadratisierens auf einem Bildschirm des Endbenutzers ausgegeben. Dabei wird eine beliebige bekannte Schaltung zur Lieferung der verarbeiteten Daten an den Endbenutzer benutzt, z. B. Fernsehkabelkanäle. Mit ihrer Hilfe wird die Darstellung mit Bildern in Echtzeit vorgenommen. Die Bilder werden von Videokameras empfangen, die an den Kreuzungen angeordnet sind. Dabei erfolgt diese Darstellung ununterbrochen oder in Form von Dauereinschaltungen. Der Bildschirm des Endbenutzers wird mit den Daten gefüllt, welche von den Videoüberwachungsgeräten in Echtzeit empfangen werden. Jedes Ausgabefenster mit solchen Informationen wird mit einer Titelschrift und/oder mit irgendeinem Zeichen auf dem Geländeplan versehen. Die Titelschrift gibt den Standort der Informationsquelle an. Die vollständige Darstellung auf dem Bildschirm des Endbenutzers mit einem Bild von den genannten Bildquellen erfolgt gleichzeitig mit einer Anzeige anderer Informationen, die mittels eines Fernsehsignals übertragen werden. Das Endbild wird für den Benutzer erzeugt und mittels eines bestimmten Fernseh- bzw. Internetkanals in ein jeweiliges Verteilungsnetz gesendet, um nachher an den Endbenutzer geliefert zu werden.

Zwischen den kennzeichnenden Merkmalen und dem erreichten technischen Effekt liegt folgende Ursache- und Folgeverbindung vor.

Die Geräte zur Videoüberwachung (Videokameras) sind an den Kreuzungen angeordnet. Danach erfolgt eine weitere Übertragung der in Echtzeit empfangenen Informationen an eine Zentrale für einen Empfang, eine Aufnahme und eine Verarbeitung. Hier werden die Daten von den Videokameras ausgewertet und an einen Apparate-Senderaum geliefert. Der Apparate-Senderaum weist einen Satz Gerätetechnik, Schaltungen und Verfahren zur Verarbeitung und Analyse der empfangenen Daten auf. Diese Daten werden mittels z. B. Bündelung und/oder Quadratisierens erzeugt und auf einem Bildschirm eines Endbenutzers ausgegeben. Diese Art und Weise ermöglichen es dem Benutzer, wirksam und schnell den kürzesten Weg z. B. zum Arbeitsplatz oder zu einer kritischen Stelle, z. B. auf der Strasse, zu wählen. Die Anwendung eines beliebigen bekannten Systems zur Lieferung von verarbeiteten Daten an den Endbenutzer, z. B. Fernsehkabelkanäle, mit deren Hilfe die Bilder in Echtzeit übertragen werden, sorgt für eine schnelle Datenübertragung sowie für eine hohe Wirksamkeit des neuen Verfahrens gegenüber dem Stand der Technik und dem Prototyp. Die Darstellung auf dem Bildschirm des Endbenutzers mit Bilddaten, die in Echtzeit von den Videoüberwachungsgeräten (Videokameras) ununterbrochen oder in Form von langen Einschaltungen empfangen werden, sowie eine Titelschriftbegleitung zur Bezeichnung des Standorts der Informationsquelle in jedem Ausgabefenster mit solchen Informationen und/oder Anzeige eines beliebigen Zeichens auf dem Geländeplan tragen auch zur Effizienz bei, denn diese Lösung sorgt für eine schnelle Wahrnehmung der Information und Erkennung einer bestimmten Stelle (einer Brücke, einer Kreuzung, einer Straße usw.). Die vollständige Darstellung auf dem Bildschirm des Endbenutzers, und zwar die Anzeige von Bildern aus verschiedenen Quellen und eine gleichzeitige Anzeige anderer Informationen, die mittels Fernsehens übertragen werden, erhöhen ebenfalls die Funktionalitäten des neuen Verfahrens. Diese stellen nicht nur die Echtzeitbildübertragung von mehreren voneinander entfernten Videokameras über eine einheitliche Mehrfach-Systemhauptleitung (Mehrkanalsystemhauptleitung) sondern auch zusätzliche Informationen sicher, damit der Endbenutzer diese Informationen bekommen kann.

Somit erlaubt die Gesamtheit der Merkmale des neuen Verfahrens, die Wirksamkeit des neuen Verfahrens zu erhöhen, die Funktionalitäten gegenüber dem Stand der Technik und dem Prototyp zu erweitern, indem die Bildübertragung in Echtzeit von mehreren voneinander unterschiedlich entfernten Videokameras über eine einheitliche Mehrfach-Systemhauptleitung an einen Umwandlungsknoten erfolgt, und indem die Daten weiter auf einem oder mehreren Bildschirmen ausgegeben werden, darunter auch mit zusätzlichen Informationen.

Der Anmelder hat eine Analyse des Stands der Technik und dabei eine Recherche über Patent- und andere wissenschaftlichen und technischen Druckschriften durchgeführt, um Druckschriften mit Angaben über Vergleichserzeugnisse zu finden. Es wurde kein Stand der Technik mit den gleichen Merkmalen entdeckt wie die der Gesamtheit aller kennzeichnenden Merkmale des neuen Verfahrens zur Mehrfach-Videoüberwachung an Kreuzungen.

Gemäß den dem Anmelder vorliegenden Angaben ist die Gesamtheit der kennzeichnenden Merkmale der Erfindung "Verfahren zur Mehrfach-Videoüberwachung von Kreuzungen" aus dem Stand der Technik nicht bekannt. Somit darf geschlussfolgert werden, dass die Erfindung neu ist. Die Auswahl des Prototyps aus dem bekannten Stand der Technik ermöglichte die Festlegung der Gesamtheit aller wesentlichen kennzeichnenden Merkmale in Bezug auf das neue Verfahren zur Mehrfach-Videoüberwachung an Kreuzungen gemäß den Ansprüchen der Erfindung. Folglich erfüllt die angemeldete Erfindung "Verfahren zur Mehrfach-Videoüberwachung von Kreuzungen" auch die Voraussetzung in Bezug auf die Neuheit.

Um zu prüfen, ob die angemeldete Erfindung auch die vorausgesetzte Erfindungshöhe aufweist, hat der Anmelder eine zusätzliche Recherche in Bezug auf bekannte technische Lösungen vorgenommen, um solche Merkmale festzustellen, die mit den kennzeichnenden Merkmalen des neuen Verfahrens zur Mehrfach-Videoüberwachung von Kreuzungen zusammenfallen. Die Rechercheergebnisse haben gezeigt, dass das neue Verfahren zur Mehrfach-Videoüberwachung von Kreuzungen für einen Fachmann unter Berücksichtigung des Stands der Technik nicht naheliegend ist. Der vom Anmelder festgestellte Stand der Technik hat keinen Einfluss auf die wesentlichen Merkmale der Erfindung hinsichtlich des erreichten technischen Effekts.

Folglich beruht die Erfindung "Verfahren zur Mehrfach-Videoüberwachung von Kreuzungen" auf einer erfinderischen Tätigkeit.

Somit zeugen die dargelegten Angaben davon, dass bei der Nutzung des neuen Verfahrens zur Mehrfach-Videoüberwachung von Kreuzungen mit der Gesamtheit der in den Ansprüchen formulierten kennzeichnenden Merkmale der Erfindung die Ausführbarkeit anhand der in der Anmeldung, nämlich in den Beispielen, beschriebenen technischen Mittel nachgewiesen ist. Die technischen Mittel, mit deren Hilfe das neue Verfahren zur Mehrfach-Videoüberwachung von Kreuzungen ausgeführt wird, sorgen dafür, dass der vom Anmelder erkannte technische Effekt erreicht wird. Dieser technische Effekt umfasst eine Erhöhung der Wirksamkeit und eine Erweiterung der Funktionalitäten dadurch, dass das Bild von mehreren voneinander unterschiedlich entfernten Videokameras über eine einheitliche Mehrfach-Systemhauptleitung in Echtzeit an einen Umwandlungsknoten übertragen wird, und dass die Bilder nachher evtl. auch mit zusätzlichen Informationen auf einem oder mehreren Bildschirmen ausgegeben werden. Folglich ist die Erfindung "Verfahren zur Mehrfach-Videoüberwachung von Kreuzungen" gewerblich anwendbar.

Die Gesamtheit der wesentlichen Merkmale, welche das Wesen der Erfindung "Verfahren zur Mehrfach-Videoüberwachung von Kreuzungen" kennzeichnen, kann mehrfach im Rahmen einer technisch nicht zu sehr komplizierten Mehrkanal-Videoüberwachung von Kreuzungen angewendet werden. Dabei wird das technische Ergebnis, nämlich die Erhöhung der Wirksamkeit, erreicht.

Das Wesen der Erfindung "Verfahren zur Mehrfach-Videoüberwachung von Kreuzungen" wird anhand von Ausführungsbeispielen und anhand eines Schaltbilds näher erläutert. Es zeigen:

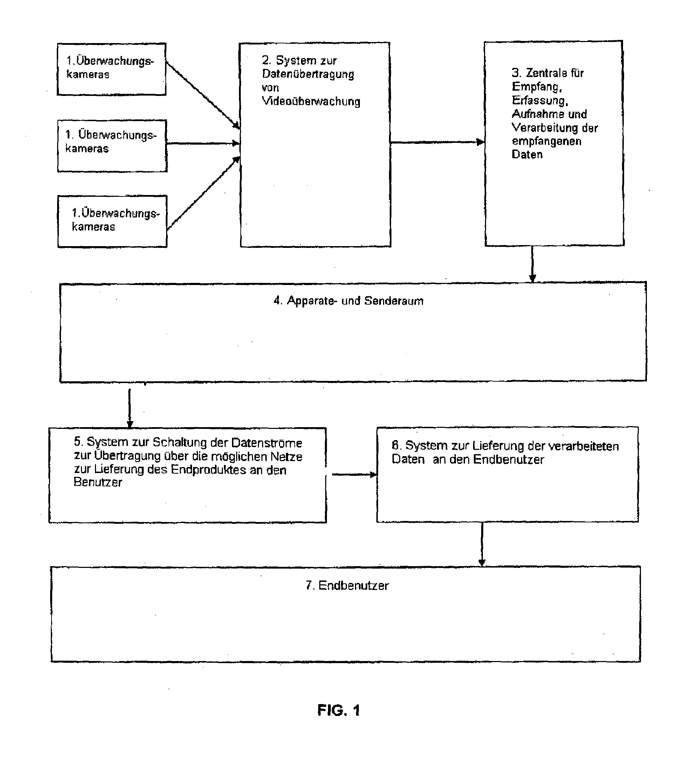

- Fig. 1: eine schematische Darstellung für die Ausführung des Verfahrens und

Das Verfahren zur Mehrfach-Videoüberwachung von Kreuzungen wurde wie folgt ausgeführt.

Einige externe Informationserfassungsquellen werden in den zu überwachenden Bereichen an den Kreuzungen angeordnet. Die Informationserfassungsquellen sind Videoüberwachungsgeräte. Jedes davon weist eine Videokamera für Außenüberwachung auf. Die Videoüberwachungsgeräte mit den Außenüberwachungskameras werden an den größten Kreuzungen der Stadt Tyumen, und zwar an den Brücken über den Fluss Tura und der Tchelyuskintsev-, Melnikaite- und Profsoyuznaya-Straße, an den Überführungen über die Maurice Torez-, die Permyakova- und die Melnikaite-Straße angeordnet. Die von den Überwachungskameras über die Datenübertragungsanlage empfangenen Informationen werden verarbeitet und über Lichtfaserkabel, Koaxialkabel, Funkfrequenzen, Internet und Lokalnetze an eine einheitliche Überwachungszentrale, und zwar an eine Zentrale für den Empfang, die Erfassung, die Aufnahme und die Auswertung der empfangenen Daten weitergeleitet. Hier werden die Daten mit Hilfe von Video-Registriergeräten, Vermittlungsgeräten, Integriergeräten und Bild- und Tonsynchroneinrichtungen an einen Apparate-Senderaum übertragen. Hier wird ein Bildschirm für den Endbenutzer anhand eines Satzes von Gerätetechnik, Schaltungen und Verfahren zur Datenauswertung mittels z. B. Bündelung ausgebildet, damit die Endbenutzer selbst die Auslastung der Kreuzungen in den verschiedenen Stadtvierteln in Echtzeit einschätzen und evtl. zusätzliche Informationen usw. bekommen können. Somit wird das empfangene Signal zur Zusammenstellung auf einem Bildschirm im Apparate-Senderaum an das Vermittlungssystem weitergeleitet. Das Vermittlungssystem weist Schaltgeräte und Einrichtungen für eine Signalerzeugung, -verstärkung, -synchronisation und -umrechnung auf. Das Vermittlungssystem generiert somit einen Datenstrom als Endprodukt für die Übertragung über alle möglichen Übertragungsnetze zum Benutzer. Dabei wird ein System für die Lieferung der verarbeiteten Daten an den Endbenutzer verwendet, und zwar: Übertragungsnetze, Systeme von digitalen, Internet-, Sendungs- und Fernsehkabelkanälen u. a. m. Mit ihrer Hilfe wird die Anzeige auf dem Bildschirm in Echtzeit in den Bildern dargestellt. Diese Bilder werden von den Außenüberwachungskameras empfangen. Die Kameras sind vorher an den genannten Kreuzungen montiert worden. Die Daten zur Darstellung auf dem Bildschirm werden von einem oder mehreren solchen Videoüberwachungsgeräten empfangen. Dabei wird die Anzeige auf dem Bildschirm des Endbenutzers mit den Bildern der genannten Quellen und gleichzeitig mit anderen mittels eines Fernsehsignals gesendeten Informationen dargestellt. Das Endbild für den Benutzer wird mittels eines bestimmten Fernseh-, Internetkanals aufgebaut und in ein oder anderes Signalverteilungsnetz gesendet, damit der Endbenutzer die Daten bekommen kann. Der Bildschirm des Endbenutzers wird mit den von den Videoüberwachungsgeräten in Echtzeit empfangenen Daten ununterbrochen oder in Form von Dauereinschaltungen versehen. Dabei wird jedes Ausgabefenster neben den ausgegebenen Bildern mit einer Titelschrift oder mit einem Zeichen auf einem Geländeplan begleitet, um unter anderem den Standort der Informationsquelle zu kennzeichnen. Bei Umständen höherer Gewalt bzw. zwecks Sicherstellung einer erhöhten Sicherheit wird das Videobild von der Informationsquelle durch einen Plan eines zu überwachenden Geländeabschnitts ersetzt, und es werden symbolhafte Zeichen eingesetzt, um die Belastung des Geländes mit den Verkehrsmitteln anzugeben.

Dank dem neuen "Verfahren zur Mehrfach-Videoüberwachung von Kreuzungen" kann der Endbenutzer die Straßensituation selbständig in Echtzeit einschätzen und eine bestimmte Entscheidung über seine weiteren Handlungen - ob weiterfahren oder laufen - zu treffen. Darüber hinaus können gleichzeitig sonstige zusätzliche Informationen abgelesen werden (es handelt sich dabei um kommerzielle Informationen, Werbungsinformationen, Nachrichten, thematische Informationen). Diese werden zeilenweise oder als Fenster mit den Fernsehsendungen (Programmveranstaltungen, Kinos und Videofilme, Kommerz- und Sozialvideos, Anzeigen usw.) zusammen mit Echtzeitbildern von den Außenüberwachungskameras angezeigt.

Als Bedienpult wird ein Rechner mit einem Hard- und Softwaremultiplexer verwendet, wobei der Audiokanal und die digitale Aufnahme synchronisiert werden können. Dabei wird das Bedienpult serienweise mit jedem Kabelsender verbunden. Dabei wird das System mit einer Summierungseinheit (Summierer) zur Addition der Bereiche der Videoaudiosignale von Kabelsendern ergänzt. Der Summierer ist in die Fernsehkabelleitung eingebaut, die in dem Koaxialkabel ausgebildet ist. Der Eingang jedes Kabelsenders wird an den Ausgang der jeweiligen Videokamera und eines Mikrofons angeschlossen. Der Ausgang des Kabelsenders wird an den Eingang des Bereichssummierers angeschlossen. Ein Speise-Injektor ist eine Stromversorgung mit einem Filter. Er dient zur Stromversorgung der Systemelemente, und zwar der Kabelsender und der Videokameras mit den Mikrofonen. Dabei ist die Stromversorgung über ein Filter an das Koaxialkabel angeschlossen. Das Filter sorgt dafür, dass die Fernsehsignale zur Stromversorgung nicht durchgelassen werden und dass sie nicht abgedämpft werden. Als Steuerung wird ein Personalrechner mit einer Erweiterungsbaugruppe verwendet. Die Erweiterungsbaugruppe ermöglicht den Empfang und die gleichzeitige Ausgabe von einigen Überwachungsobjekten (Soft- und Hardwaremultiplexer), wobei der Audiokanal und die digitale Aufnahme synchronisiert werden. Die Bereichssummierungseinheit (Summierer) ist zusätzlich mit einem Pegelregler ausgerüstet, um die Pegel des Eingangs- und des Summierungssignals nach einem Eingang abzugleichen. Die Bereichssummierungseinheit weist auch einen Speisekreis auf. Dadurch kann der einige Ampere starke Strom über eine Mittenader des Koaxialkabels fließen, ohne dass jegliche Störungen die Funktion der Bereichssummierungseinheit (Summierer) beeinträchtigen. Dabei wird die Aufgabe einer kompakten Einrichtung gelöst, welche das System durch das Vorhandensein von zusätzlichen Elementen in keiner Weise erschwert.

Der Kabelsender dient zur Umwandlung der Video- und der Audiosignale in ein Funkfrequenz- Fernsehsignal und stellt folgendes sicher:
- keine Abweichung des Feldwellenwiderstands der Hauptleitung und folglich kein Übersprechen, keine Wiederreflexionen, keine Dämpfungen und Schlagfehler anderer Leitungssignale;
- keine Störungen der frequenzmäßig übergeordneten Fernsehsignalleitungen;
- eine Ausgleichbarkeit des Pegels mit dem Sammelspektrum der Fernsehsignale und folglich die normale Funktion der nachgeschalteten Einrichtungen der Hauptleitung (Fernsehleitungsverstärker, Equalizer, Teiler, Koppler (Abzweiger) usw.);
- eine eigene Stromversorgung, Stromversorgung von Videokameras usw. von der freien Speisespannung in der Hauptleitung. Arbeitsaufwändige Berechnungen der Spannungsabfälle bei verschiedenen Kabelarten und bei verschiedenen Hauptleitungslängen entfallen;
- ein normales Durchfließen der Signale (Unterträger) der Rücksteuerung in der Hauptleitung, d. h. der Signale von dem Verbraucher zu den Quellen.

Die Erfindung "Verfahren zur Mehrfach-Video-Audio-Überwachung von Kreuzungen" ermöglicht die Erweiterung der Funktionalitäten, indem eine Bildübertragung von mehreren Videokameras über eine einheitliche Mehrfach-Systemhauptleitung an einen Umwandlungsknoten in Echtzeit sichergestellt wird mit einer nachfolgenden Ausgabe der Bilddaten auf einem und mehreren Bildschirmen. Dadurch wird die Wirksamkeit und folglich die Lebensqualität erhöht und die Anzahl von Straßenverkehrsunfällen vermindert.

## Patentansprüche

1. Verfahren zur Mehrfach-Videoüberwachung von Kreuzungen, bei dem der Zustand von Objekten mittels Videoüberwachungsgeräten überwacht wird,
bei dem die Videoüberwachungsgeräte an den Kreuzungen angeordnet werden und die empfangenen Daten von den Videoüberwachungsgeräten über eine Datenübertragungsanlage an einen Apparate-Senderaum übertragen werden,
bei dem die empfangenen Daten mit Hilfe von einem Satz Gerätetechnik, Schaltungen und Verfahren zur Verarbeitung und Analyse der von der Empfangs-, Erfassungs- und Auswertungszentrale empfangenen Daten verarbeitet und dann auf den Bildschirmen der Endbenutzer dargestellt werden,
bei dem ein System zur Übermittlung der verarbeiteten Daten an einen Endbenutzer verwendet wird, wobei mit Hilfe des Systems die Darstellung mit Bildern in Echtzeit vorgenommen wird,
bei dem die Bilder von den an den Kreuzungen angeordneten Videoüberwachungsgeräten ununterbrochen oder in Form von Dauereinschaltungen aufgenommen werden,
**dadurch gekennzeichnet,**
**dass** der Bildschirm des Endbenutzers in mehrere Ausgabefenster aufgeteilt wird,
**dass** in den mehreren Ausgabefenstern des Bildschirms des Endbenutzers jeweils die Bilder dargestellt werden, welche von den Videoüberwachungsgeräten in Echtzeit aufgenommen werden, und
**dass** jedes Ausgabefenster mit einer Titelschrift und/oder einem Zeichen auf einem Geländeplan begleitet wird, wobei die Titelschrift den Standort der Videoüberwachungsgeräte angibt.

2. Verfahren nach Anspruch 1,
**dadurch gekennzeichnet,**
**dass** die Bilder für den Endbenutzer mittels eines bestimmten Fernseh- oder Internetkanals übertragen werden.

3. Verfahren nach Anspruch 1,
**dadurch gekennzeichnet,**
**dass** zusätzlich zu einem Bild ein Audiosignal übertragen wird.

4. Verfahren nach Anspruch 1,
**dadurch gekennzeichnet,**
**dass** bei einer drahtgebundenen Verbindung zu den Videoüberwachungsgeräten eine Energieversorgung der Videoüberwachungsgeräte über die drahtgebundene Verbindung vorgenommen wird.

## Claims

1. A method for multiple video surveillance of intersections, in which the status of objects is monitored by means of video surveillance devices,
in which the video surveillance devices are placed at the intersections, and the data received from the video surveillance devices are transmitted via a data transmission system to a signal broadcasting studio;
in which the received data are processed with the aid of a set of equipment technology, circuits, and methods for processing an analysis of the data received from the central receiving, acquisition and evaluation facility and are then displayed on the screen of the end users;
in which a system for forwarding the processed data to an end user is employed, and with the aid of the system the display is accomplished using images in real time;
in which the images are recorded, uninterruptedly or in the form of permanent connections, by the video surveillance devices placed at the intersections
**characterized in that**
the end user's screen is divided up into a plurality of output windows;
that in the plurality of output windows of the end user's screen, the respective images that are recorded by the video surveillance devices in real time are displayed; and
that each output window is accompanied by a written title and/or a character on a terrain map, and the written title indicates the location of the video surveillance devices.

2. The method of claim 1,
**characterized in that**
the images for the end user are transmitted by means of a particular television or Internet channel.

3. The method of claim 1,
**characterized in that**
in addition to an image, an audio signal is transmitted.

4. The method of claim 1,
**characterized in that**
when there is a cable connection to the video surveillance devices, energy is supplied to the video surveillance devices via the cable connection.

## Revendications

1. Procédé de surveillance vidéo multiple de carrefours, dans lequel l'état d'objets est surveillé au moyen d'appareils de surveillance vidéo,
les appareils de surveillance vidéo étant disposés aux carrefours et les données reçues en provenance des appareils de surveillance vidéo étant transmises à un espace émetteur séparé par l'intermédiaire d'une installation de transfert de données,
les données reçues étant traitées par la centrale de réception, de saisie et d'évaluation à l'aide d'un ensemble technique d'appareils, de circuits et de procédés de traitement et d'analyse des données reçues et étant ensuite présentées aux utilisateurs finaux sur des écrans,
un système de transmission de données reçues à un utilisateur final étant utilisé et la représentation en images en temps réel étant réalisée à l'aide du système,
les images des appareils de surveillance vidéo disposés aux carrefours étant reçues de façon ininterrompue ou sous la forme de raccordements permanents,
**caractérisé en ce que**
l'écran de l'utilisateur final est divisé en plusieurs fenêtres de sortie,
**en ce que** les images qui sont enregistrées en temps réel par les appareils de surveillance vidéo sont présentées sur les différentes fenêtres de sortie de l'écran de l'utilisateur final et
**en ce que** chaque fenêtre de sortie est accompagnée d'un texte de titre et/ou d'un signe sur une carte du terrain, le texte de titre indiquant l'emplacement où se trouvent les appareils de surveillance vidéo.

2. Procédé selon la revendication 1, **caractérisé en ce que** les images sont transmises à l'utilisateur final au moyen d'un canal de télévision ou internet défini.

3. Procédé selon la revendication 1, **caractérisé en ce qu'**un signal audio est transmis en plus d'une image.

4. Procédé selon la revendication 1, **caractérisé en ce que** dans le cas d'une liaison filaire des appareils de surveillance vidéo, une alimentation en énergie des appareils de surveillance vidéo est réalisée par l'intermédiaire du raccordement filaire.
